# EUROPÄISCHE PATENTANMELDUNG

(11) **EP 1 199 558 A2**
(43) Veröffentlichungstag der Anmeldung: **24.04.2002**
(21) Anmeldenummer: 01124084.3
(22) Anmeldetag: 10.10.2001
(51) Int. Cl.: G01N 27/22

(54) **Bio-Chip**

(30) Priorität: 16.10.2000 DE 10051252
(71) Anmelder: Stiftung CAESAR, 53111 Bonn (DE)
(72) Erfinder: Moske, Michael, Dr., 53359 Rheinbach (DE)
(74) Vertreter: COHAUSZ HANNIG DAWIDOWICZ & PARTNER

(57) **Zusammenfassung**

Verfahren zum qualitativen und/oder quantitativen Nachweis eines Analyten aufweisend polarisierbare Moleküle, insbesondere in molekularer Form gelöste Biomoleküle, mittels eines Sensors mit mehreren Meßzellen, wobei die Dimension einer Meßzelle kleiner als ein Millimeter ist, wobei ein die Moleküle bindendes Substrat 18 zwischen zwei einen Meßkondensator bildenden Elektroden 9,10 einer Meßzelle 3 eingebracht wird, wobei die nachzuweisenden Moleküle auf das Substrat 18 aufgebracht werden und wobei die sich durch die an das Substrat 18 angelagerten Moleküle veränderte Kapazität des Kondensators gemessen wird.

## Beschreibung

Die vorliegende Erfindung betrifft ein Verfahren zum qualitativen und/oder quantitativen Nachweis polarisierbarer Moleküle (Analyten), insbesondere in molekularer Form gelöster Biomoleküle, mittels eines Sensors mit mehreren Meßzellen, wobei die Dimension einer Meßzelle kleiner als ein Millimeter ist. Die Erfindung betrifft gleichfalls eine Vorrichtung (Analysechip), insbesondere zur Durchführung des Verfahrens, aufweisend mindestens eine als Ausnehmung in einen Grundkörper ausgebildete Meßzelle, deren Dimension in Öffnung und Tiefe kleiner als ein Millimeter ist und auf deren Boden eine Elektrode angeordnet ist, wobei auf den Boden ein Substrat aufbringbar ist, das die Moleküle bindende Rezeptoren aufweist.

Der Nachweis insbesondere von Biomolekülen, wie beispielsweise von Antikörpern, mit derartigen Analysechips ist hinlänglich bekannt. Im allgemeinen werden die einzelnen Meßzellen eines solchen Bio-Chips mit unterschiedlichen Rezeptoren, beispielsweise mit Aminosäuresequenzen, ausgestattet, die auf unterschiedliche Moleküle sensibel sind. Die Auslese der Meßzellen und somit der Nachweis des Analyten geschieht beispielsweise mittels radioaktiver oder fluoreszierender Marker, die sich am Analyten befinden und deren Strahlung auf einem Film darstellbar oder mittels Detektoren meßbar ist. Auch ist es bekannt, die Menge des Analyten in den einzelnen Meßzellen mittels eines Elektronenmikroskopes oder optischen Mikroskops zu bestimmen. Die genannten Verfahren sind einerseits mit einem hohen Aufwand verbunden und bieten andererseits nur eine verhältnismäßig geringe Genauigkeit der Ergebnisse. So ist eine quantitative Messung wegen der Ungenauigkeiten nur bedingt möglich. Für standardisierte und zuverlässige Reihenuntersuchungen sind die bekannten Verfahren und die nach den Verfahren arbeitenden Bio-Chips nur bedingt geeignet ist.

Neben den genannten Sensoren sind auch Sensoren mit einer elektrischen Auslese von Bindungsereignissen bekannt. Bei diesen elektrochemischen Verfahren werden räumlich weit voneinander entfernte Elektroden eingesetzt und zur Auslese die von den Ladungen auf der Elektroden-Grenzschicht ausgelösten Effekte gemessen. Die zu messenden Effekte sind schwach und von störenden Elektrolyten beeinflußt. Dadurch wird der Nachweis des Analyten entsprechend ungenau. Die bekannten Verfahren eignen sich somit wegen des hohen apparativen Aufwandes nicht gut für Standarduntersuchungen.

Außerdem sind Mikroelektrodenarrays bekannt, deren Meßzellen anhand der Änderung des durch den Analyten bedingten Stromflusses zwischen zwei Elektroden ausgelesen werden. Das Ausleseverfahren der Impedanzspektroskopie, das sich einer Hochfrequenz von einigen MHz an den Elektroden bedient, bedarf ebenfalls eines hohen apparativen Aufwandes hinsichtlich der Auswerteelektronik und ist zudem ungenau. Auch diese Mikroelektrodenarrays sind für Routineuntersuchungen nicht besonders geeignet.

Aufgabe der vorliegenden Erfindung ist es, ein Verfahren zum einfachen und genauen Nachweis polarisierbarer Moleküle zu schaffen, das sich mit geringem apparativen Aufwand umsetzen läßt. Gleichzeitig ist es Aufgabe der Erfindung, eine zuverlässige und kostengünstige Vorrichtung zur Durchführung des Verfahrens zu schaffen.

Diese Aufgaben werden durch das Verfahren nach Anspruch 1 und die Vorrichtung nach Anspruch 7 gelöst.

Ein wesentlicher Gedanke der Erfindung liegt darin, die Meßzellen, deren Dimension im Sub-Milimeterbereich liegt, als Kondensator auszubilden und zwischen den Elektroden des Kondensators ein den Analyten bindendes Substrat anzuordnen. Dabei kann es sich um beliebige organische oder anorganische Analyten handeln, wobei sich bevorzugt Biomoleküle nachweisen lassen, die im Feld des Kondensators polarisierbar sind. Nachdem das Substrat dem insbesondere in Lösung befindlichen Analyten ausgesetzt wurde, lagern auf bekannte Weise die Moleküle des Analyten am Substrat an. Da die nachzuweisenden Analyten sich zumindest in Verbindung mit dem Substrat polarisieren lassen ändert sich durch die Anlagerung die Kapazität des Kondensators entsprechend der sich verändernden Dielektrizitätskonstanten. Diese Änderung kann mittels einer einfachen aber präzisen elektronischen Schaltung gemessen und ins Verhältnis zu der Kapazität des vom Analyten unbelasteten Kondensators gesetzt werden. Somit wird erfindungsgemäß die relative Änderung der Kapazität des Meßkondensators vor und nach dem Aufbringen der nachzuweisenden Moleküle des Analyten bestimmt. Die Kapazitätsänderung steht im direkten Zusammenhang mit der Konzentration des Analyten. Die Erfindung bietet somit ein elektrisches Ausleseverfahren für ein universelles miniaturisiertes insbesondere biologisches Multidetektionssystern (Bio-Chip). Sie umfaßt dabei einerseits das besondere elektrische Verfahren zur Bestimmung der Analytkonzentrationen und andererseits das Design und die technische Auslegung der Analysevorrichtung.

Der erfindungsgemäße Bio-Chip besteht aus einem Areal von kleinen einzeln beschreib- und lesbaren Detektionszellen mit lateralen Abmessungen von etwa 100 Mikrometern oder kleiner. Die einzeln adressierbaren Zellen sind so ausgelegt, daß bioaktive Moleküle dosiert auf elektrophoretischem Wege aufgetragen werden können und eine Reaktion oder Anreicherung rnit einer biomolekularen Testsubstanz durch kapazitive Differenzmessung auf elektrischem Wege festgestellt werden kann. Die so gewonnene Information dient der Weiterverarbeitung in einem Computer, beispielsweise für einen Kreuzvergleich zwischen den verschiedenen Detektionszellen. Der Bio-Chip kann somit auch als Informationsspeicher verstanden werden, wobei jede Meßzelle eine Speichertiefe für quantitative Information aufweist, die nur durch die Auflösung der Messung begrenzt ist.

Bei einer vorteilhaften Ausführungsform ist es für die elektrische Auslese erforderlich, die Kapazität des Meßkondensators, also die Meßzelle, mit der Kapazität eines Referenzkondensators zu vergleichen. Dazu werden der Meßkondensator und der Referenzkondensator in einer Wechselstrommeßbrücke verschaltet und ein Nullabgleich durchgeführt. Eine solche Meßbrücke zur Bestimmung kleiner Kapazitäten ist die sogenannte Thompson-Brücke, wie sie beispielsweise von A. M. Thompson in IRE Trans. Instrum. I-7 (1958), 245 beschrieben wird. Für die vorliegende Anwendung ist es vorteilhaft, die Meßbrücke mit einer vergleichsweise geringen Frequenz zwischen 5 Hz und 5000 Hz zu betreiben. Die Genauigkeit, die mit einer solchen Meßbrücke erreicht werden kann, liegt bei 0.000001 pF, was bei den zu erwartenden Kapazitäten von etwa 0.1 pF und Änderungen von etwa 0.0001 pF einer Genauigkeit mehr als 0.1% entspricht.

Das erfindungsgemäße Verfahren zeichnet sich durch eine einfache Handhabung und eine hohe Zuverlässigkeit aus. Das Verfahren und die das Verfahren umsetzende Vorrichtung sind besonders für standardisierte Reihenuntersuchungen geeignet und bringen qualitative aber auch quantitative Ergebnisse hoher Genauigkeit. Der so konzipierte Bio-Chip ist kostengünstig und trägt so zu einer hohen Akzeptanz der damit möglichen Untersuchungen im Markt bei.

In einer besonders vorteilhaften Ausführungsform, wird das Substrat und/oder eine mit Analyt belastete Lösung durch Elektrophorese, also durch Beschleunigung der Substrat- oder Analytmoleküle in einem auf eine Kondensatorplatte fokussierten elektrischen Feld, auf einer der Elektroden aufgebracht. Damit kann zunächst der Kondensator mit Substrat präpariert und später mit Analyt gezielt beaufschlagt werden ("elektrofokussiertes Spotten"). So können die Substanzen unabhängig von ihrer Viskosität gezielt in eine Meßzelle eingebracht und eine Kreuzkontamination vermieden werden.

Wesentlicher Aspekt der erfindungsgemäßen Vorrichtung ist, daß innerhalb einer Meßzelle zwei Elektroden angeordnet sind, wobei eine Elektrode am Boden und eine zweite Elektrode an einer Wandung einer Meßzelle anbracht ist. Beide Elektroden bilden zusammen einen Kondensator, wobei das Substrat mit den daran befindlichen Rezeptoren im Feld dieses Kondensators angeordnet ist. Wenn die Meßzellen als topfähnliche Ausnehmungen in einem Grundkörper gestaltet sind, ist es vorteilhaft die zweite Elektrode als Rundelektrode zu formen, die an der Wandung der insbesondere zylindrisch geformten Ausnehmung anliegt und die Ausnehmung auskleidet. Beide Elektroden bilden damit einen Ringkondensator.

Die Erfindung wird im folgenden anhand der Figuren 1 bis 6 näher beschrieben. Es zeigen:
- **Figur 1**: einen Analysechip in Explosionsdarstellung,
- **Figur 2**: die Kontaktierung auf einem Analysechip,
- **Figur 3**: eine einzelne Meßzelle im Schnitt,
- **Figur 4**: Ausführungsformen von Meßzellen,
- **Figur 5**: das Spotten einer Meßzelle und
- **Figur 6**: ein elektrisches Schaltbild einer Meßbrücke.

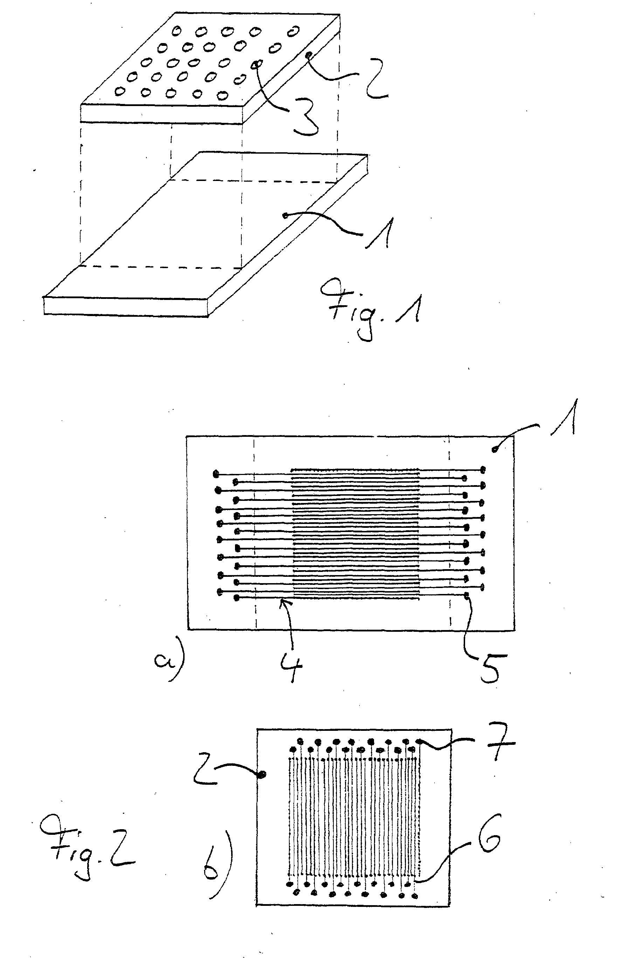

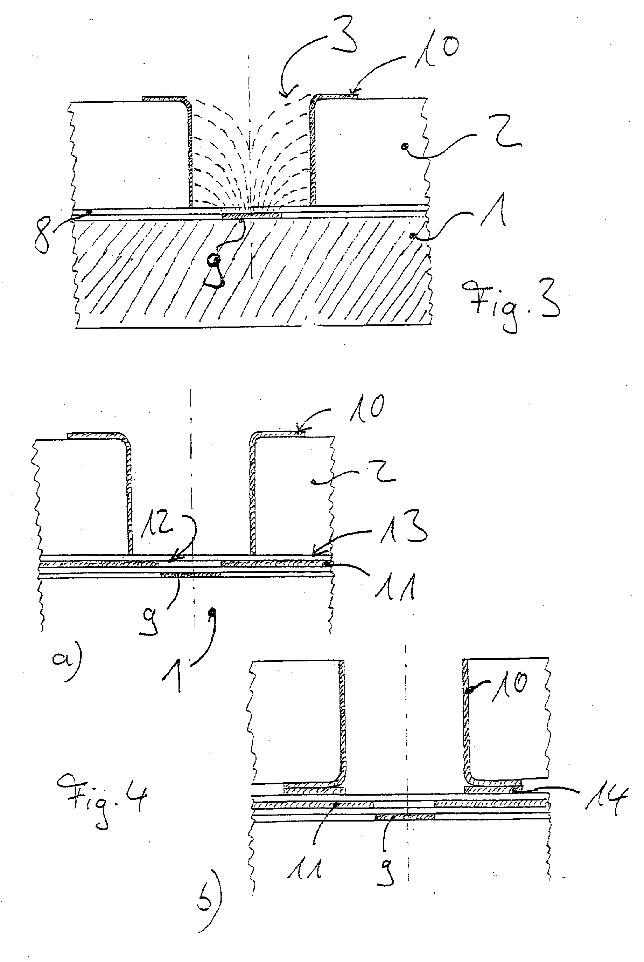

Der erfindungsgemäße Bio-Chip (Analysechip) weist ein planares nichtleitendendes Trägerelement 1 als Grundkörper mit einer darauf aufliegenden nichtleitenden Lochplatte 2 auf. Die Lochplatte 2 und das Trägerelement 1 sind in der Figur 1 in Explosionsdarstellung gezeigt. In die Lochplatte 2 sind Bohrungen 3 als Ausnehmung eingebracht, von denen auch nur einige repräsentativ dargestellt sind. Tatsächlich enthält der Bio-Chip ein Areal von weit mehr als 100 Detektions- oder Meßzellen 3. In den Zellen 3 befinden sich jeweils zwei voneinander isolierte Elektroden, die jeweils über eine Leiterbahn elektrisch kontaktiert werden. Wie in Figur 2a zu erkennen ist, sind auf das Trägerelement 1 Leiterbahnen 4 aufgebracht, die über Kontakte 5 an den Enden der Leiterbahnen 4 angeschlossen werden. Die Leiterbahnen 4 können mit den bekannten Verfahren der Ätztechnik oder der Lithographie aufgebracht sein. Wie das Trägerelement 1 weist auch die Lochplatte 2 Leiterbahnen 6 auf, die über Kontakte 7 anschließbar sind (Figur 2b). Nach dem Aufeinanderlegen von Trägerelement 1 und Lochplatte 2 kreuzen sich die voneinander isolierten Leiterbahnen 4 und 6. Die Elektroden sind somit über strukturierte Leiterbahnen 4 und 6 gekreuzt auf zwei getrennten Ebenen kontaktiert und dadurch elektrisch einzeln adressierbar. Dabei ist es auch möglich, die auf dem Trägerelement 1 befindlichen Elektroden zu einer einzigen Elektrode zusammenzufassen, die ein gemeinsames Potential bildet.

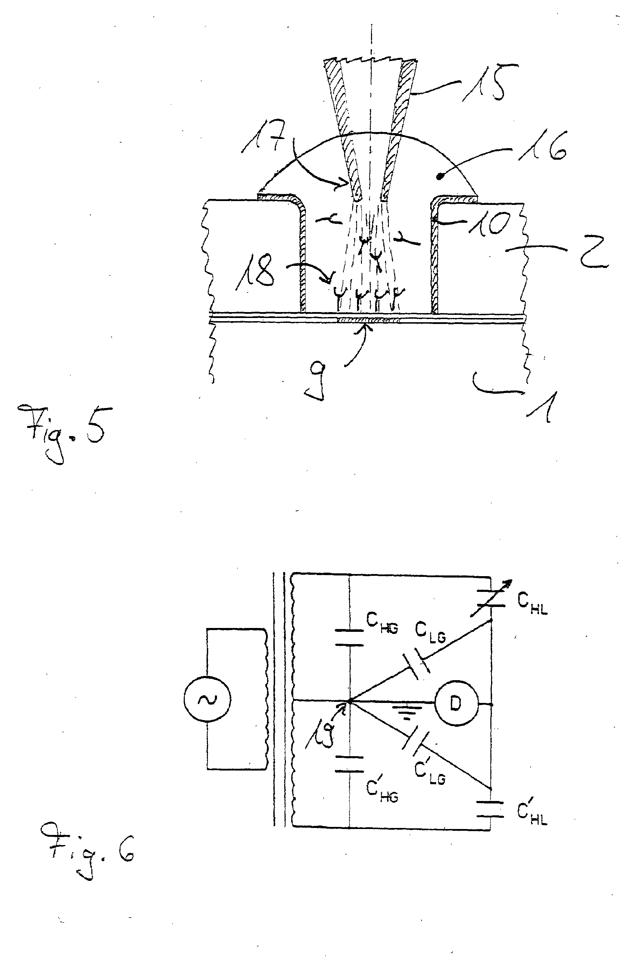

In Figur 3 ist eine Meßzelle im Schnitt dargestellt, die von einer Bohrung 3 in der Lochplatte 2 gebildet ist. Dabei ist die Lochplatte 2 auf das Trägerelement 1 unter Vermittlung einer Isolierschicht 8 aufgelegt. Die Isolierschicht 8 bedeckt eine Boden- oder Trägerelektrode 9, die über eine Leiterbahn 4 kontaktiert wird. Der Durchmesser von einer Goldschicht gebildeten Trägerelektrode 9 beträgt in diesem Beispiel etwa 0.1 mm. Die Wandung der Bohrung 3 ist mit einer ebenfalls von einer Goldschicht gebildeten Rundelektrode 10 bedeckt. Die Rundelektrode 10 wird über die Oberseite der Lochplatte kontaktiert. Die Elektrodensysteme bilden in jeder Lochstruktur einen miniaturisierten Ringkondensator. In der Figur 3 ist der typische Feldverlauf des Ringkondensators dargestellt. Mit der dünnen elektrischen Isolationsschicht 8, die beispielsweise von Silizium-Oxyd gebildet wird, kann der eventuell erhöhten Leitfähigkeit des Lösungsmittels für die Testsubstanzen begegnet werden.

In einem anderen Ausführungsbeispiel wird eine verbesserte Elektrofokussierung mit einer durchgängigen Elektrodenfläche 11 erreicht, die Ausnehmungen 12 aufweist, wobei sich die Ausnehmungen 12 mit den Elektrodenflächen 9 decken (Figur 4a). Auf diese Weise werden störende zusätzliche Effekte der Elektrodenzuführungen auf der Trägerplatte eliminiert. Auf die Elektrodenfläche 11 wird ebenfalls eine Isolationsschicht 13 aufgetragen. Die Trägerplatte 1 und die Lochplatte 2 werden nach paßgenauer Positionierung miteinander verklebt.

Eine weitere Ausführungsform sieht die Orientierung der vorstrukturierten Lochplatte 2 "über Kopf" vor, wobei mit einer dritten Metallisierungs- und Leiterbahnebene 14 auf der Trägerplatte 1 eine Versinterung herbeigeführt werden kann (Bild 4b). Diese Form ist zu bevorzugen, da sich so jegliche Kontaktierung in einer Ebene, nämlich der Ebene der Trägerplatte befindet.

Die Lochplatten werden vorzugsweise von Herstellern der Mikrotechnik-Branche bezogen. Sie können aber auch durch Stanzen, durch Laserschneiden oder durch lithographische Ätzverfahren hergestellt werden. Für eine Elektrodenherstellung ist eine Verrundung an den Lochoberkanten von Vorteil. Die Elektrodenmetallisierung erfolgt zunächst großflächig durch Bedampfen oder Sputtertechnik in einer Weise, die einen schrägen Einfall des Metallisierungsgutes auf die Lochinnenwände erlaubt. Als Metall wird vorzugsweise Gold wegen seiner Korrosionsbeständigkeit verwendet. Bei der Herstellung ist es vorteilhaft, die Lochplatten während der Metallisierung in der Plattenebene zu drehen. Für die Trägerplatte ist der schräge Einfall nicht erforderlich.

Nach der ganzflächigen Beschichtung wird ebenfalls ganzflächig ein Fotolack aufgetragen und die Elektroden auf der Trägerplatte bzw. die Leiterbahnen auf Träger- und Lochplatte z.B. mittels einer Maskentechnik mit UV-Belichtung und einem anschließendem naßchemischem Ätzverfahren erzeugt. Die paßgenaue Klebung der beiden Platten kann unter einem Mikroskop erfolgen. Es ist darauf zu achten, daß nach der Montage kein elektrischer Kontakt zwischen den Elektrodensystemen von Lochplatte und Trägerplatte besteht.

Der elektrophoretische Schreibvorgang, also die Auftragung von insbesondere unterschiedlichen bioaktiven Substanzen 18 in einer Detektionszelle erfolgt mittels des sogenannten "Spottens". Dabei wird wie in Figur 5 dargestellt mit einer feinen mikroplazierten Nadelkanüle 15 ein Mikrotropfen 16 in der Bohrung 3 plaziert. Für eine verbesserte Lokalisierung auf der Elektrode 9, für eine definierte Dosierung und zur Steigerung der Mobilität bei hochviskosen Flüssigkeiten ist es von Vorteil, zwischen der elektrisch leitenden Nadelspitze 17 und der Zellenelektrode 9 eine elektrische Spannung im Bereich 1-10 V anzulegen, deren Feldlinien dargestellt sind. In dem Feld werden die bioaktiven Moleküle beschleunigt (Elektrophorese), und lagern sich elektrofokussiert im Bereich der Elektrodenfläche 9 an. Die jeweilige Elektrodenfläche 9 ist elektrisch durch die Leiterbahnkontaktierung zugänglich, wobei dafür sorge zu tragen ist, daß sie gegenüber der Ringelektrode 10 isoliert ist.

Die Funktionsweise des kapazitiven Ausleseverfahrens ist folgendermaßen : Der Bio-Chip ist so konzipiert, daß er über ein nicht dargestelltes feinmechanisches System mit Federkontaken elektrisch ausgelesen werden kann. Die Federkontakte beaufschlagen die Kontaktpunkte 5 und 7. Zur Auslese wird der ganze Chip in eine Führung eingesteckt, in der sich die kleinen fest positionierte Federkontakte für die Elektrodenzuführungen befinden und auf die Kontakte 5 und 7 aufgedrückt werden. Die Federkontakte sind dann elektrisch mit einer Meßelektronik verbunden. Beim Anlegen einer Spannung zwischen den beiden Elektroden einer Zelle entsteht ein radialsymmetrischer Feldverlauf der das Lochvolumen durchdringt. Die Kapazität hängt dabei bekanntermaßen von der absoluten Größe der Elektrodenflächen, deren Abstand zueinander und der relativen Dielektrizitätskonstanten des Zwischenraums ab (relativ zur Dielektrizitätskonstanten des Vakuums).

Das elektrische Ausleseverfahren basiert nun darauf, daß sich die nachzuweisenden Moleküle des Analyten im elektrischen Feld polarisieren lassen und so über die elektrische Induktion die gespeicherte Ladung erhöhen. Die erhöhte Kapazität des Kondensators wird dabei durch die geänderte relative Diektrizitätskonstante beschrieben und ist durch die Art und die Anzahl der Moleküle vorgegeben. Wenn der Kondensator mit Trägermolekülen des Substrates präpariert ist, kann zunächst ein Ausgangswert der Kapazität bestimmt werden. Wird nun das zusätzliche Material des Analyten eingebracht, das an die Trägermoleküle bindet, so erhöht sich die relative Dielektrizitätskonstante innerhalb der Detektorzelle. Die Auswertung, also der Vergleich mit dem ursprünglichen Zustand, wird als kapazitive Differenzmethode bezeichnet.

Voraussetzung für das Verfahren ist, daß einerseits die Trägermoleküle des Substrates fest an einer der Elektroden haften und die eingebrachten Biomoleküle andererseits fest an den Trägermolekülen haften. Eine Wanderungsbewegung sollte vermieden werden. Diese kann jedoch durch Anlegen einer Wechselspannung, wie unten beschrieben wird, zusätzlich unterdrückt sein. Es ist auch denkbar, daß in dem hier beschriebenen Meßsystem ein zeitlich veränderlicher Zustand der Moleküle erfaßt wird, wie er nach einer weiteren biochemischen Manipulation z.B. einer Faltung oder Entfaltung von DNA vorliegt. Bei direktem Kontakt der Trägerelektrode mit dem Lösungsmittel ist eine geringe Gleichstromleitfähigkeit des Lösungsmittels zu gewährleisten, da dadurch die Genauigkeit der Einzelmessung beeinträchtigt wird. Diese Fehlerquelle wird vermieden, wenn, wie in den Figuren 3 und 4 vorgeschlagen, eine zusätzliche Isolationsschicht auf den Trägerplattenelektroden aufgetragen wird.

Das elektrische Ausleseverfahren basiert auf der einzeln adressierbaren Messung der elektrischen Kapazität der Elektrodenanordnung innerhalb der Detektorzellen. Für eine präzise Messung müssen typischerweise mit Temperaturänderungen stark schwankende Streukapazitäten, insbesondere die der Zuleitungen untereinander, vermieden werden. Streukapazitäten werden insbesondere indirekt über die Einkopplung zur elektrischen Erdung vermittelt. Um die dadurch bedingten Fehler zu vermeiden, ist es vorteilhaft, eine 3-Punkt-Brückenschaltung nach Thompson einzusetzen, die mit einer Wechselspannung niedriger Frequenz von etwa 1 Hz bis 10 KHz betrieben wird (siehe Ersatzschaltbild in Figur 6).

In einer solchen mit einer Wechselspannung betriebenen Brückenschaltung wird die zu ermittelnde Meßkapazität C_{HL} mit einer Referenzkapazität C'_{HL} verglichen. Im Falle der Gleichheit beider Werte (Nullabgleich) liegt der Brückenmittelabgriff 19 auf dem gleichen Spannungswert wie das Erdungspotential. Ein solcher Nullabgleich kann mit hoher Genauigkeit am Meßgerät D kontrolliert werden, so daß der Wert der Meßkapazität C_{HL} präzise bestimmbar ist. Die Streukapazitäten der Zuleitungen C_{HG} ,C_{LG} ,C'_{HG} und C'_{LG} sind bei einem Nullabglich vollständig kompensiert. Das Meßprinzip mit automatischem Abgleich wird z.B. in einer Präzisionskapazitätsmessbrücke AH 2500 A der Fa. Andeen-Hagerling realisiert. Die Genauigkeit der Messung ist besser als 0.000001 pF. Die Werte der Kapazität der in Figur 3 dargestellten Elektrodenanordnung an Luft liegen im Bereich von 0.1 pF, wobei für den Nachweis von Analyten Änderungen von mindestens 0.0001 pF zu erwarten sind.

Für eine definierte Messung der elektrischen Kapazität einer Detektionszelle ist es notwendig, daß sich zwischen den übrigen Zellen keine elektrischen Felder ausbilden. Dies wird dadurch gewährleistet, daß die Meßspannung nur an den Leiterbahnkontaktierungen anliegt, die sich direkt an der Detektionszelle kreuzen, während alle übrigen Leiterbahnen auf Erdungspotential gelegt werden. Dies kann mit einem elektrischen Relaissystem mit je zwei Schaltzuständen erreichen werden, das durch einen Computer angesteuert wird. Eine direkte Ansteuerung durch die oben angegebene Meßbrücke, die eine solche Möglichkeit beinhaltet, ist ebenfalls möglich. Das Auslesen aller Detektionszellen erfolgt dann sequentiell durch Umschalten der entsprechenden Wortleitungen (Elektroden auf dem Träger) bzw. der entsprechenden Bitleitungen (Elektroden auf der Lochplatte). Die Anzahl der Leitungen kann zur vereinfachten Verarbeitung als Vielfaches von 4-Bit gewählt werden. In Figur 2 sind beispielsweise 32 Wort- und 32 Bitleitungen realisiert.

## Patentansprüche

1. Verfahren zum qualitativen und/oder quantitativen Nachweis eines Analyten aufweisend polarisierbare Moleküle, insbesondere in molekularer Form gelöste Biomoleküle, mittels eines Sensors mit mehreren Meßzellen, wobei die Dimension einer Meßzelle kleiner als ein Millimeter ist,
**dadurch gekennzeichnet,**
- **daß** ein die Moleküle bindendes Substrat (18) zwischen zwei einen Meßkondensator bildenden Elektroden (9,10) einer Meßzelle (3) eingebracht wird,
- **daß** die nachzuweisenden Moleküle auf das Substrat (18) aufgebracht werden und
- **daß** die sich durch die an das Substrat (18) angelagerten Moleküle veränderte Kapazität des Kondensators gemessen wird.

2. Verfahren nach Anspruch 1,
**dadurch gekennzeichnet, daß** das Substrat (18) und/oder der Analyt durch Elektrophorese auf einer der Elektroden (9) aufgebracht wird.

3. Verfahren nach Anspruch 2,
**dadurch gekennzeichnet, daß** das Aufbringen des Substrates (18) und/oder des Analyten mittels eines elektrischen Feldes auf die Elektrode (9) fokussiert wird.

4. Verfahren nach einem der vorherigen Ansprüche,
**dadurch gekennzeichnet, daß** die relative Änderung der Kapazität des Meßkondensators vor und nach dem Aufbringen der nachzuweisenden Moleküle bestimmt wird.

5. Verfahren nach einem der vorherigen Ansprüche,
**dadurch gekennzeichnet, daß** die Kapazität des Meßkondensators mit der Kapazität eines Referenzkondensators verglichen wird, wobei Meßkondensator und Referenzkondensator in einer Wechselstrommeßbrücke verschaltet sind.

6. Verfahren nach Anspruch 5,
**dadurch gekennzeichnet, daß** die Wechselstrommeßbrücke mit einer Frequenz zwischen 5 Hz und 5000 Hz betrieben wird.

7. Vorrichtung (Analysechip) zum qualitativen und/oder quantitativen Nachweis polarisierbarer Moleküle, insbesondere zur Durchführung des Verfahrens nach einem der Ansprüche 1 bis 6, aufweisend mindestens eine als Ausnehmung in einen Grundkörper ausgebildete Meßzelle, deren Dimension in Öffnung und Tiefe kleiner als ein Millimeter ist und auf deren Boden eine Elektrode angeordnet ist, wobei auf den Boden ein die Moleküle bindende Rezeptoren aufweisendes Substrat aufbringbar ist,
**dadurch gekennzeichnet, daß** eine zweite (10) Elektrode an einer Wandung einer Meßzelle (3) angeordnet ist, die zusammen mit der ersten Elektrode (9) einen Kondensator bildet, wobei die Rezeptoren (18) im Feld des Kondensators angeordnet sind.

8. Vorrichtung nach Anspruch 7,
**dadurch gekennzeichnet, daß** die zweite Elektrode (10) eine Rundelektrode ist, die an der Wandung der insbesondere zylindrisch geformten Ausnehmung anliegt und die Ausnehmung auskleidet, wobei die beiden Elektroden (9,10) einen Ringkondensator bilden.

9. Vorrichtung nach Anspruch 7 oder 8,
**gekennzeichnet durch** einen Array von Meßzellen (3), die als systematisch angeordnete zylindrische Ausnehmungen, insbesondere als Durchgangsbohrungen, in eine Lochplatte (2) eingebracht sind, wobei die Lochplatte (2) auf einer Trägerplatte (1) aufgebracht ist.

10. Vorrichtung nach einem der Ansprüche 7 bis 9,
**dadurch gekennzeichnet**,daßdieersteElektrode(9)eine Plattenelektrode ist, die auf der Trägerplatte (1) aufgebracht ist.

11. Vorrichtung nach einem der Ansprüche 7 bis 10,
**dadurch gekennzeichnet, daß** jede Rundelektrode (10) von einer Metallschicht gebildet ist, die auf die Lochplatte (2) aufgedampft oder aufgesputtert ist.

12. Vorrichtung nach einem der Ansprüche 7 bis 11,
**dadurch gekennzeichnet, daß** die Rundelektroden (10) über die Fläche der Ober- und/oder Unterseite der Lochplatte (2) elektrisch kontaktiert werden.

13. Vorrichtung nach einem der Ansprüche 7 bis 12,
**dadurch gekennzeichnet, daß** zwischen der Lochplatte (2) und der Trägerplatte (1) eine Isolationschicht (8) angeordnet ist, von der die Plattenelektroden (9) bedeckt sind.

14. Vorrichtung nach einem der Ansprüche 7 bis 13,
**dadurch gekennzeichnet, daß** zwischen der Lochplatte (2) und der Trägerplatte (1) eine beidseitig isolierte metallische Erdungsschicht (11) angeordnet ist, die im Bereich der Plattenelektroden (9) Aussparungen aufweist.

15. Vorrichtung nach einem der Ansprüche 7 bis 14,
**dadurch gekennzeichnet, daß** die Kapazität der einzelnen Meßzellen (3) separat oder blockweise bestimmbar ist.
